# DEMANDE DE BREVET EUROPEEN

(11) **EP 0 592 274 A1**
(43) Date de publication de la demande: **13.04.1994**
(21) Numéro de dépôt: 93402344.1
(22) Date de dépôt: 24.09.1993
(51) Int. Cl.: B60F 3/00

(54) **Châssis de véhicule automobile amphibie et véhicule comportant un tel châssis**

(30) Priorité: 05.10.1992 FR 9211771
(71) Demandeur: HOBBYCAR S.A., F-41400 Thenay (FR)
(72) Inventeur: Wardavoir, François, Les Aulnières, F-41120 Cellettes (FR)

(57) **Abrégé**

L'invention concerne »un châssis de véhicule automobile amphibie comportant un caisson central (74), au moins un longeron avant (77) et au moins un longeron arrière (78) pour définir deux espaces latéraux de chaque côté de chaque longeron. Ce châssis comporte une structure interne principale (2) placée à l'intérieur d'une coque (19) étanche et des éléments (3, 4, 5) externes de structure s'étendant à l'extérieur de la coque (19).

## Description

L'invention concerne un châssis de véhicule automobile amphibie.

Jusqu'à présent, la conception des véhicules amphibies est réalisée soit à partir d'un véhicule automobile classique auquel on adjoint des éléments de coque et des moyens d'étanchéité multiples, soit à partir d'une structure classique de bateau à laquelle on adjoint des moyens de transmission terrestres.

Dans le premier cas, l'adjonction d'éléments de coque et des moyens d'étanchéité est délicate, coûteuse, et problématique. Il en résulte une étanchéité peu fiable. De plus le véhicule étant à la base conçu comme un véhicule terrestre, son comportement hydraulique et sur l'eau n'est pas satisfaisant, sauf à rajouter des éléments d'équilibrage ou des éléments de structure qui alourdissent l'ensemble et grèvent le coût du véhicule.

Dans le deuxième cas, la structure de navire s'avère généralement insuffisamment rigide et appropriée au comportement routier du véhicule qui n'est pas satisfaisant.

L'invention vise donc à remédier à ces inconvénients en proposant un châssis de véhicule amphibie spécialement conçu dès l'origine pour satisfaire d'une part aux contraintes mécaniques du comportement routier du véhicule et d'autre part assurer un comportant du véhicule sur l'eau satisfaisant.

L'invention vise en particulier à proposer un tel châssis qui soit suffisamment rigide pour porter le groupe moteur, les éléments de transmission, les accessoires et les occupants en assurant une bonne tenue de route du véhicule, tout en étant suffisamment léger et équilibré pour assurer un comportement sur l'eau satisfaisant.

L'invention vise également à proposer un tel châssis qui permette de disposer un groupe moteur en position centrale par rapport aux essieux du véhicule, et des places assises pour des passagers symétriquement réparties autour du groupe moteur.

L'invention vise également à proposer un tel châssis adapté à la réalisation d'un véhicule de plein air amphibie à dossiers de siège rabattables tel que décrits dans le brevet français FR-A-2.620.395.

L'invention vise également à proposer un tel châssis dont le poids et le prix de revient sont aussi faibles que possible.

Pour ce faire, l'invention concerne un châssis de véhicule automobile amphibie caractérisé en ce qu'il comporte un caisson central de réception d'un groupe moteur délimité au moins vers l'avant et/ou l'arrière par deux traverses centrales - c'est-à-dire une traverse centrale avant et une traverse centrale arrière -, au moins un longeron avant et au moins un longeron arrière associés rigidement respectivement à chaque traverse du caisson central pour définir deux espaces latéraux correspondant à des places assises de chaque côté de chaque longeron à l'avant et à l'arrière du caisson central.

Un châssis selon l'invention comporte un même nombre de longerons avant et de longerons arrière, les longerons avant et arrière s'étendant deux à deux selon une même direction longitudinale du véhicule. Dans une mode de réalisation et selon l'invention, le châssis comporte un longeron avant et un longeron arrière s'étendant selon la direction longitudinale médiane du véhicule de part et d'autre du caisson central.

Les traverses centrales du caisson central sont reliées l'une à l'autre par deux longerons latéraux s'étendant entre les extrémités des traverses centrales pour les réunir en les prolongeant sur la même hauteur, de façon à former le caisson central.

Selon l'invention, chaque longeron avant et arrière est constitué d'une poutre réalisée globalement d'une plaque de tôle repliée selon des lignes de pliage longitudinales. Chaque longeron avant et arrière est donc constitué d'une poutre creuse munie éventuellement de parois transversales de renfort. Chaque longeron avant et arrière a une section droite transversale de même hauteur que celle de la traverse centrale laquelle il est associé rigidement, et cette section droite transversale de chaque longeron avant et arrière est en U, rectangulaire ou carrée.

Chaque traverse centrale du caisson central est globalement constituée d'une plaque de tôle couchée sur chant de façon à former une paroi transversale verticale s'étendant sur toute la largeur du véhicule.

Le châssis selon l'invention comporte également une traverse extrême avant associée rigidement à l'extrémité avant d'un longeron avant, et une traverse extrême arrière associée rigidement à l'extrémité arrière d'un longeron arrière.

Selon l'invention, le caisson central, les longerons avant et arrière et les traverses extrêmes sont constituées de plaques de tôle repliées et ajourées.

Le châssis selon l'invention comporte également un squelette inférieur tubulaire associé rigidement sous le caisson central, les longerons et les traverses. Ce squelette inférieur tubulaire sert de renfort pour le plancher, d'ancrage pour des berceaux de suspension décrits ci-après, et renforce le châssis en torsion autour de la direction longitudinale. Le squelette inférieur tubulaire comporte un cadre globalement rectangulaire et des renforts transversaux. Deux renforts transversaux s'étendent respectivement sous les traverses centrales, et les longerons latéraux reposent sur des côtés longitudinaux du cadre formés par le squelette tubulaire inférieur. Par ailleurs, le squelette tubulaire inférieur comporte des potences avant et arrière d'ancrage d'un berceau d'essieu avant et d'un berceau d'essieu arrière respectivement.

Un châssis selon l'invention est donc parfaitement équilibré, rigide, et permet de disposer un groupe moteur en position centrale et des places assises régulièrement réparties autour de ce groupe moteur.

Par ailleurs, l'invention vise également proposer un châssis de véhicule automobile amphibie dans lequel les traversées de la coque étanche sont en nombre minimum notamment pour les arbres de transmission. Egalement, l'invention vise à proposer un tel châssis qui permette néanmoins de supporter de façon satisfaisante du point de vue des contraintes mécaniques des essieux avant et arrière et les roues du véhicule. Et l'invention vise également à proposer un tel châssis grâce auquel la fixation de la coque par rapport à la structure du châssis est simple, rigide, optimale du point de vue de l'étanchéité, de la sécurité et de la rigidité de l'ensemble.

L'invention vise également à proposer un tel châssis qui soit par ailleurs compatible avec les caractéristiques et les contraintes mentionnées ci-dessus.

Pour ce faire, l'invention propose un châssis de véhicule amphibie caractérisé en ce qu'il comporte une structure interne principale placée à l'intérieur d'une coque étanche et des éléments externes de structure s'étendant à l'extérieur de la coque et associés rigidement à la structure interne principale à travers la coque par des moyens étanches d'association rigide.

Selon l'invention, les éléments externes de structure portent les essieux, les roues et les suspensions du véhicule. Egalement, les éléments externes de structure selon l'invention portent au moins un réservoir de carburant.

Selon l'invention, la coque est associée rigidement à la structure interne principale par les moyens étanches d'association rigide qui comportent des moyens de serrage pour coincer la coque entre les éléments externes de structure et la structure interne principale. Selon l'invention, les moyens étanches d'association rigide sont des moyens ponctuels d'association rigide - notamment par boulonnage -.

Selon l'invention, les éléments externes de structure comportent deux poutres latérales longitudinales, chaque poutre latérale longitudinale étant associée rigidement à la structure interne principale par chacune de ses extrémités avant et arrière, et par sa partie centrale. La partie centrale de chaque poutre latérale longitudinale est associée rigidement à chaque traverse centrale du caisson central. Et selon l'invention, chaque poutre latérale longitudinale est associée rigidement à chaque traverse de la structure interne principale, c'est-à-dire aux traverses centrales du caisson central et à chaque traverse extrême. Chaque poutre latérale longitudinale porte les amortisseurs de roue du véhicule et chaque amortisseur de roue est fixé à l'intérieur d'une poutre latérale longitudinale creuse et relié à un bras de suspension au moins sensiblement vertical portant une roue par l'intermédiaire d'un culbuteur associé libre en rotation par rapport à la poutre latérale longitudinale autour d'un axe transversal horizontal. Chaque poutre latérale longitudinale porte également un réservoir de carburant - notamment un réservoir souple - intégré à l'intérieur de chaque poutre creuse latérale longitudinale.

Selon l'invention, les éléments externes de structure comportent également un berceau avant et un berceau arrière chaque berceau étant associé rigidement sous la structure interne principale et portant des triangles de suspension des roues. Chaque berceau porte également un différentiel de transmission relié à un arbre primaire de transmission traversant la coque en provenance d'un groupe moteur, et deux arbres secondaires de transmission à joints de cardan transmettant le mouvement aux roues à partir du différentiel.

Par ailleurs, la coque d'un châssis selon l'invention peut être aussi associée par collage ou soudure à la structure interne principale et/ou à des éléments externes de structure. En particulier, la coque est associée par collage à chaque côté longitudinal du cadre formé par le squelette tubulaire inférieur de la structure interne principale.

L'invention concerne également un véhicule automobile amphibie caractérisé en ce qu'il comporte un châssis selon l'invention. Le véhicule selon l'invention comporte une carrosserie entourant le châssis et associée rigidement à la partie supérieure de la structure interne principale et aux éléments externes de structure.

L'invention concerne également un châssis de véhicule automobile amphibie et un véhicule automobile amphibie comportant en combinaison tout ou partie des caractéristiques mentionnées ci-dessus ou ci-après.

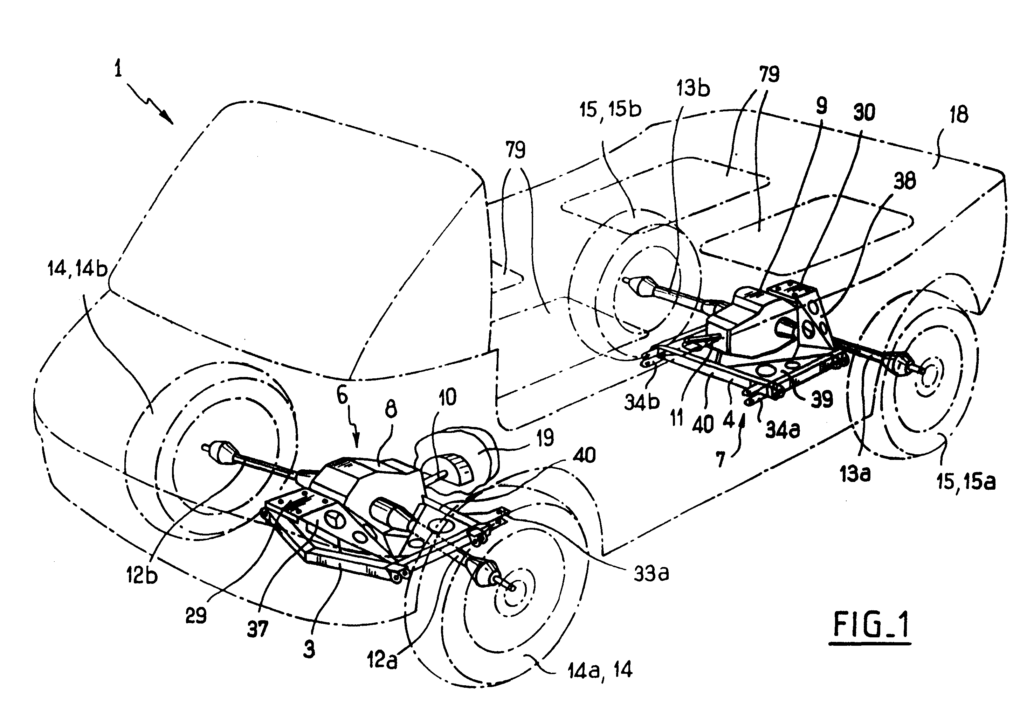

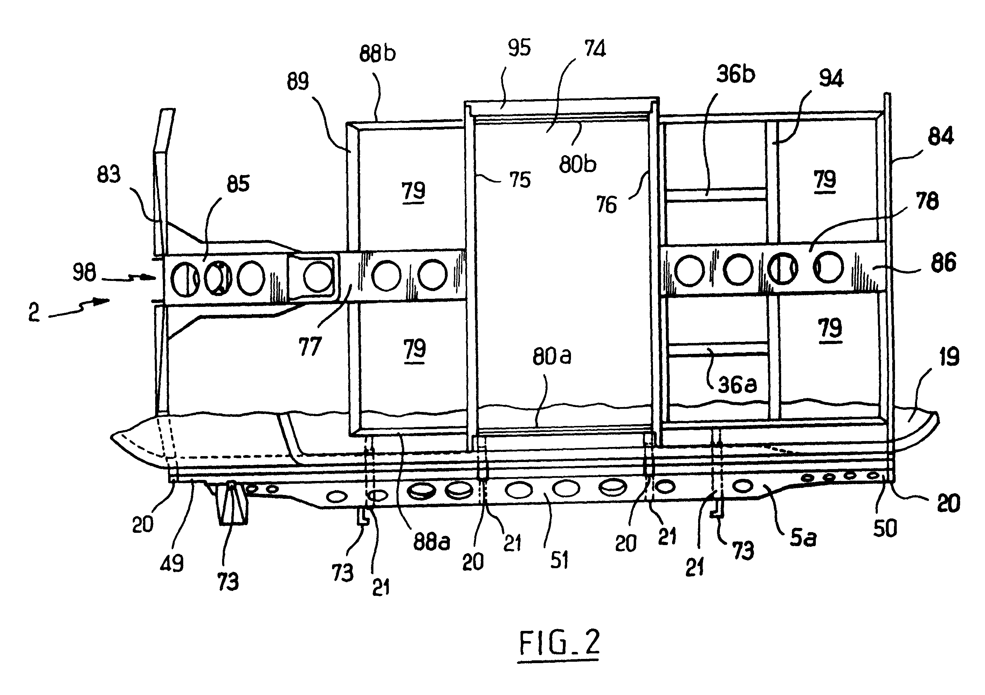

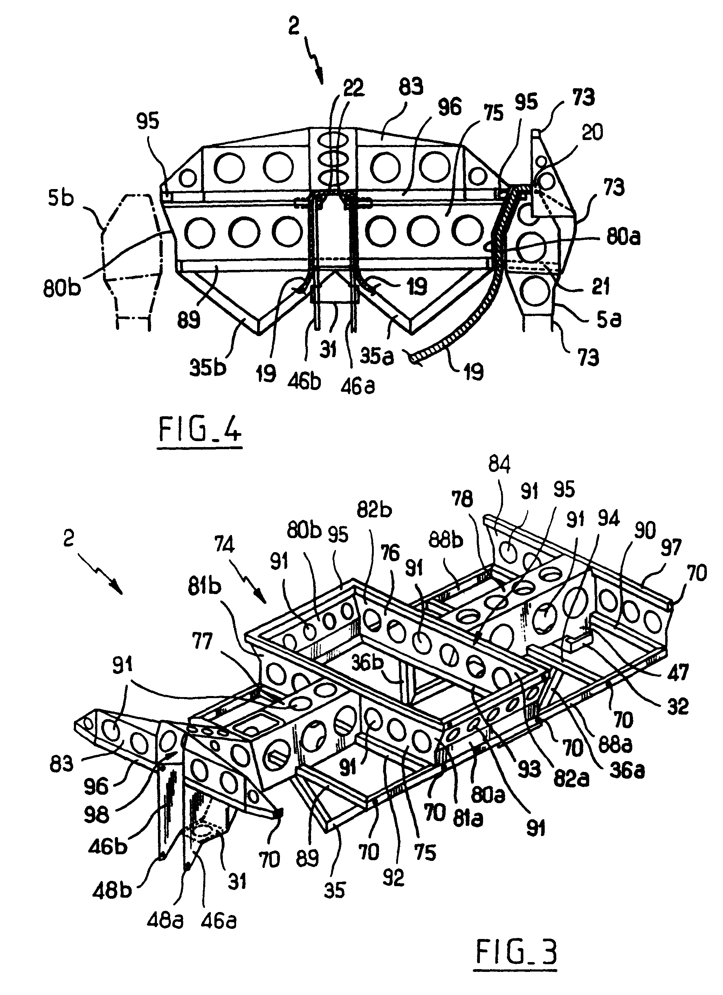

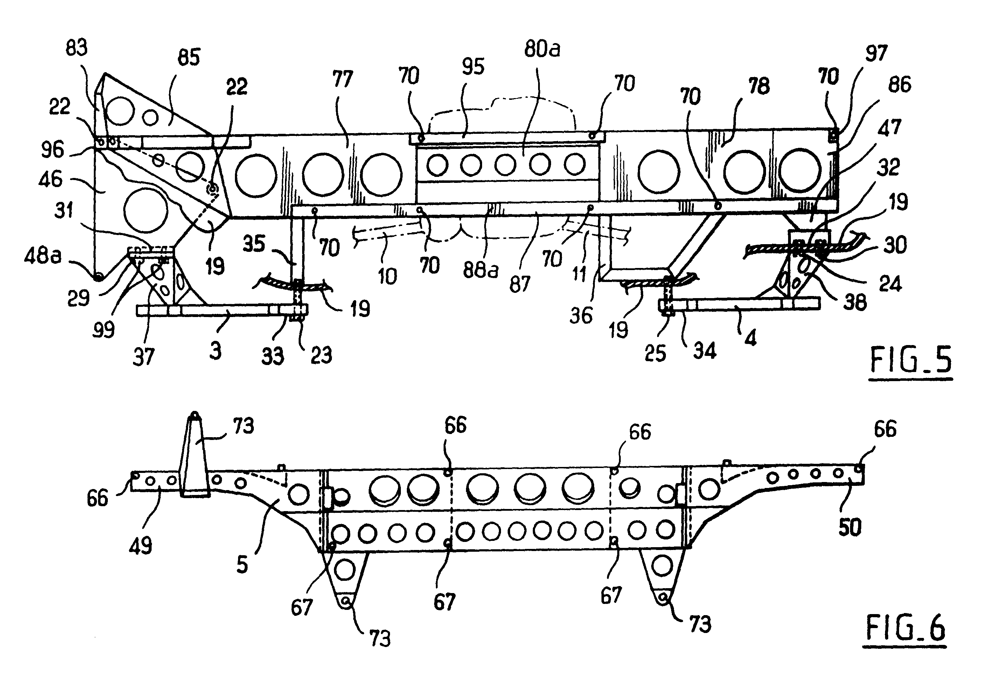

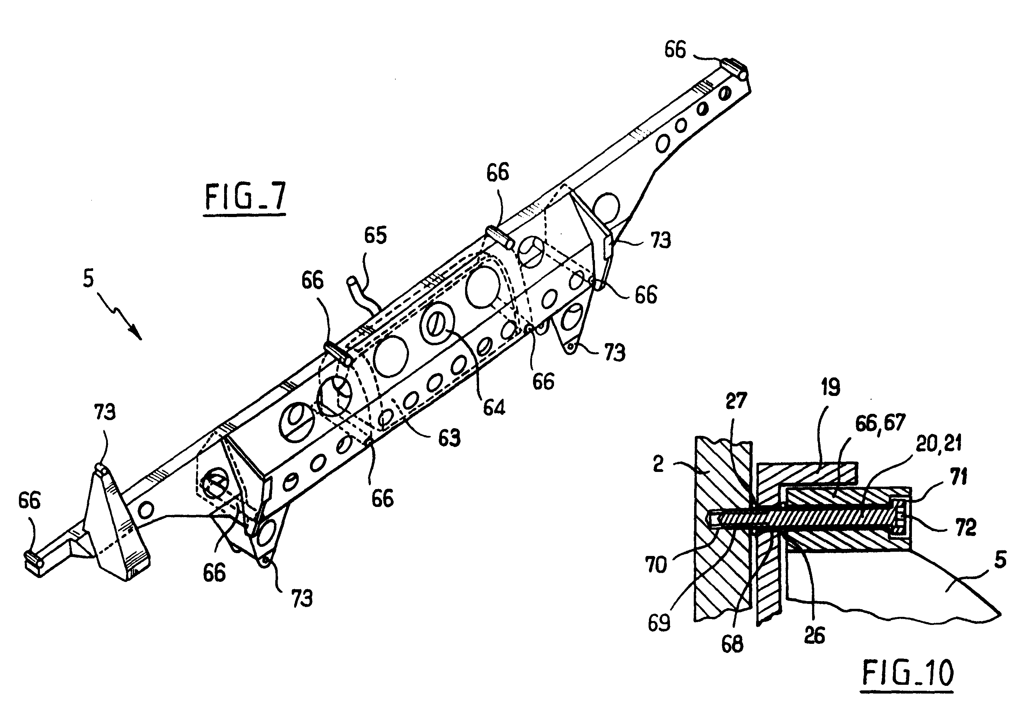

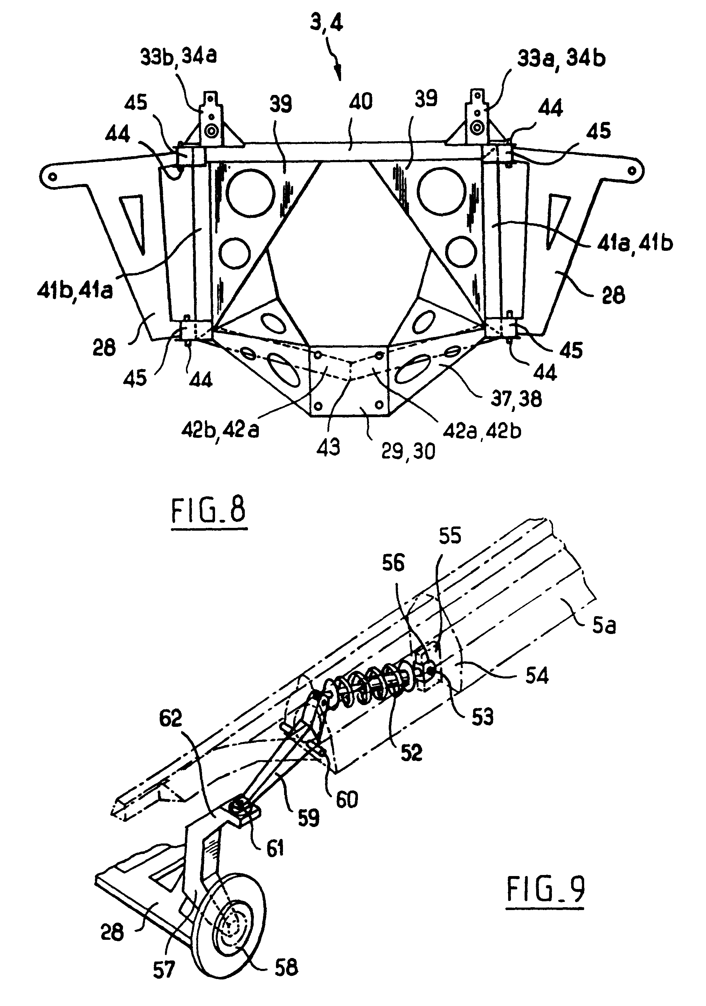

D'autres avantages et caractéristiques de l'invention apparaîtront à la lecture de la description suivante qui se réfère aux figures annexées dans lesquelles :
. La figure 1 est une vue générale en perspective illustrant l'aspect extérieur d'un véhicule selon l'invention.
. La figure 2 est une vue de dessus d'une structure principale et d'une poutre latérale longitudinale d'un châssis selon l'invention.
. La figure 3 est une vue en perspective de la structure principale d'un châssis selon l'invention.
. La figure 4 est une vue de face de la figure 2.
. La figure 5 est une vue de côté d'une structure principale équipée des berceaux avant et arrière d'un châssis selon l'invention.
. La figure 6 est une vue de côté d'une poutre latérale longitudinale d'un châssis selon l'invention.
. La figure 7 est une vue en perspective d'une poutre latérale longitudinal d'un châssis selon l'invention.
. La figure 8 est une vue de dessus d'un berceau d'un châssis selon l'invention avec les triangles de suspension.
. La figure 9 est une vue partielle en perspective illustrant le montage d'une roue avec sa suspension sur un châssis selon l'invention.
. La figure 10 est une vue en section de détail des moyens d'association d'une poutre latéral. longitudinale à la structure principale d'un chassîs selon l'invention.

La figure 1 représente l'aspect général extérieur d'un véhicule 1 selon l'invention comprenant un châssis 2, 3, 4, 5, selon l'invention. Dans l'exemple représenté, le véhicule 1 est un véhicule de plein air amphibie comprenant quatre places assises, régulièrement réparties, deux à l'avant d'un groupe moteur situé en position centrale, et deux à l'arrière du groupe moteur. Le véhicule 1 comporte par ailleurs deux essieux, à savoir un essieu avant 6 et un essieu arrière 7. Les deux essieux sont moteurs et reliés par un pont différentiel de transmission avant 8, respectivement un pont différentiel de transmission arrière 9, au groupe moteur en position centrale grâce à un arbre primaire de transmission avant 10, respectivement un arbre primaire de transmission arrière 11. Chaque différentiel de transmission 8, 9 est relié à deux arbres secondaires de transmission 12a, 12b, 13a, 13b à joints de cardan transmettant le mouvement aux roues 11a, 14b, 15a, 15b. Le différentiel de transmission avant 8 est porté par un berceau avant 3, et le différentiel de transmission arrière 9 est porté par un berceau arrière 4. Sur la figure 1, la carrosserie extérieure 18 est représentée schématiquement en traits mixtes pointillés.

Le châssis de véhicule automobile amphibie selon l'invention comporte un caisson central 74 de réception d'un groupe moteur représenté schématiquement en traits mixtes pointillés à la figure 5. Le caisson central 74 est délimité par deux traverses centrales 75, 76, à savoir une traverse centrale avant 75 et une traverse centrale arrière 76. Le châssis comporte également au moins un longeron avant 77 et au moins un longeron arrière 78 s'étendant selon un axe longitudinal du véhicule et associés rigidement respectivement à chaque traverse 75, 76 du caisson central 74 pour définir deux espaces latéraux 79 correspondant à des places assises de chaque côté de chaque longeron 77, 78 à l'avant et l'arrière du caisson central 74. Le longeron avant 77 est donc fixé à la traverse centrale avant 75 à partir de laquelle il s'étend vers l'avant longitudinalement et le longeron arrière 78 est fixé à la traverse centrale arrière 76 à partir de laquelle il s'étend longitudinalement vers l'arrière. Selon le nombre de places assises et l'encombrement en largeur que l'on veut donner au véhicule, on peut prévoir plusieurs longerons avant 77 et plusieurs longerons arrière 78 parallèles les uns aux autres. Selon l'invention, le châssis comporte le même nombre de longerons avant 77 et de longerons arrière 78, les longerons avant 77 et arrière 78 s'étendant deux à deux selon une même direction longitudinale du véhicule. Ainsi, chaque longeron arrière 78 est prolongé vers l'avant au-delà du caisson central 74 par un longeron avant 77 de même direction longitudinale. Dans le mode de réalisation représenté selon l'invention, le châssis comporte un longeron avant 77 et un longeron arrière 78 uniquement, s'étendant selon la direction longitudinale médiane du véhicule de part et d'autre du caisson central 74.

Les traverses centrales 75, 76 sont reliées l'une à l'autre par deux longerons latéraux 80a, 80b s'étendant entre les extrémités 81a, 82a, 81b, 82b des traverses centrales 75, 76 pour les réunir en les prolongeant sur la même hauteur de façon à former le caisson central 74. Ainsi, le caisson central 74 est globalement en forme de prisme droit à base rectangulaire dont les faces inférieure et supérieure sont ouvertes. En effet, un châssis selon l'invention ne comporte pas de paroi horizontale ni de plancher participant à sa rigidité. Ainsi, le caisson central 74 est exempt de paroi honrizontale inférieure ou supérieure et définit donc un logement vertical central débouchant vers le haut et vers le bas. Dans le mode de réalisation représenté, les longerons latéraux 80a, 80b ont néanmoins une section droite transversale évasée vers le haut et vers l'extérieur pour augmenter le volume disponible pour le moteur à la partie supérieure du caisson central 74.

Selon l'invention, chaque longeron avant et arrière 77, 78 est constitué d'une poutre réalisée globalement d'une plaque de tôle repliée selon des lignes de pliage longitudinales, et a une section droite transversale de même hauteur que celle de la traverse centrale 75, 76 à laquelle il est associé rigidement. Cette section droite transversale peut être en U, rectangulaire ou carrée ou autre.

Par ailleurs, chaque traverse centrale 75, 76 est globalement constituée d'une plaque de tôle couchée sur chant de façon à former une paroi transversale verticale s'étendant sur toute la largeur du véhicule.

Par ailleurs, le chassis selon l'invention comporte une traverse extrême avant 83 associée rigidement à l'extrémité avant 85 d'un longeron avant 77, ainsi qu'une traverse extrême arrière 84 associée rigidement à l'extrémité arrière 86 d'un longeron arrière 78. La traverse extrême arrière 84 est réalisée de façon similaire à la traverse centrale arrière 76, sous forme d'une plaque de tôle couchée sur chant. La traverse extrême avant 83 est également réalisée essentiellement sous forme d'une plaque de tôle couchée sur chant, mais repliée selon des lignes de pliage pour améliorer la forme aérodynamique du véhicule 1.

Selon l'invention, le caisson central 74, les longerons avant et arrière 77, 78, les traverses centrales 75, 76, les longerons latéraux 80a, 80b, et les traverses extrêmes 83, 84 sont constitués de plaques de tôles repliées et ajourées par des lumières 91 régulièrement réparties dont la position, les formes et les dimensions sont déterminées en fonction des contraintes mécaniques subies en vue d'un allégement optimum du châssis. De préférence, ces lumières 91 sont circulaires. Selon l'invention tous les éléments du châssis formés de plaques de tôles comportent, dans la mesure du possible, des lumières 91.

Par ailleurs, le châssis selon l'invention comporte un squelette inférieur tubulaire 87 associé rigidement sous le caisson central 74, les longerons avant, arrière ou latéraux 77, 78, 80a, 80b et les traverses extrêmes 83, 84. Ce squelette 87 tubulaire permet la fixation d'éléments accessoires du véhicule, la disposition d'un plancher délimitant les places assises vers le bas, l'ancrage des berceaux avant et arrière 3, 4, et rigidifie le châssis selon l'invention, notamment en torsion autour d'un axe longitudinal. Le squelette inférieur 87 comporte un cadre périphérique globalement rectangulaire constitué de deux côtés longitudinaux 88a, 88b, d'un côté avant 89 et d'un côté arrière 90. Le squelette inférieur 87 comporte également des renforts transversaux 91, 92, 93, 94. Selon l'invention, deux renforts transversaux centraux 92, 93 s'étendent sous les traverses centrales 75, 76 formant le caisson central 74, à savoir un renfort transversal central avant 92 et un renfort transversal central arrière 93. Par ailleurs, les longerons latéraux 80a, 80b du caisson central 74 reposent sur les côtés longitudinaux 88a, 88b du cadre formé par le squelette tubulaire inférieur 87. Le squelette tubulaire inférieur 87 comporte également un renfort transversal arrière 94 s'étendant transversalement sous le longeron arrière 78. Et le côté avant transversal 89 du cadre formé par le squelette 87 s'étend transversalement sous le longeron avant 77. La traverse extrême arrière 84 repose sur le côté arrière 90 transversal extrême du cadre formé par le squelette 87. Le renfort transversal arrière 94 et le côté avant 89 du squelette 87 s'étendent au moins sensiblement sous la partie médiane des longerons 77, 78 auxquels ils sont associés rigidement.

Par ailleurs, le squelette tubulaire inférieur 87 comporte des potences avant et arrière 35, 36 d'ancrage du berceau avant 3 et du berceau arrière 4. Plus précisément, le squelette tubulaire 87 comporte une potence 35a avant gauche d'ancrage pour une patte d'attache 33a gauche du berceau avant 3, une potence avant droite 35b pour une patte d'attache 33b droite du berceau avant 3, une potence d'ancrage arrière gauche 36a pour une patte d'attache gauche 34a du berceau arrière 4, et une potence d'ancrage arrière droite 36b pour une patte d'attache droite 34b du berceau arrière 4. Chaque potence avant 35 est constituée de deux tubes reliés entre eux pour former un V s'étendant dans un plan transversal sous le côté avant 89, le sommet étant orienté vers le bas et recevant la patte d'attache 33 correspondante. Chaque potence d'attache arrière 36 est constituée de trois tubes reliés entre eux pour former un étrier inférieur s'étendant sous le renfort transversal central arrière 93 et sous le renfort transversal arrière 94. Chaque potence 36 d'ancrage arrière comporte donc un bras vertical s'étendant sous le renfort transversal central arrière 93, un bras horizontal prolongeant horizontalement l'extrémité libre de ce bras vertical et un bras incliné vers l'arrière et vers le haut pour rejoindre le renfort arrière 94 (figure 5).

Le châssis selon l'invention comporte également un cadre tubulaire rectangulaire supérieur 95 associé rigidement au et s'étendant au-dessus du caisson central 74, c'est-à-dire au dessus des traverses centrales 75, 76 et des longerons latéraux 80a, 80b. Egalement, un tube de renfort 96 est prévu sous la traverse extrême avant 83, et un tube de renfort 97 est prévu au-dessus de la traverse extrême arrière 84.

Le châssis selon l'invention comporte une structure interne principale 2 placée à l'intérieur d'une coque étanche 19, et des éléments 3, 4, 5 externe de structure s'étendant à l'extérieur de la coque 19 et associés rigidement à la structure interne principale 2 à travers la coque 19, grâce à des moyens 20, 21, 22, 23, 24, 25 étanches d'association rigide. Et selon l'invention, la coque 19 étanche qui permet la flottaison du véhicule 1 est associée rigidement à la structure interne principale 2 du châssis par et uniquement par ces moyens 20 à 25 étanches d'association rigides qui comportent des moyens de serrage pour coincer cette coque 19 entre les éléments 3, 4, 5 externes de structure et la structure interne principale 2. Ces moyens 20 à 25 étanches d'association rigide sont selon l'invention des moyens ponctuels d'association rigide - notamment par boulonnage - des éléments 3, 4, 5 externes de structure à la structure interne principale 2. Et l'étanchéite peut être réalisée grâce à au moins un joint d'étanchéité torique 26, interposé entre chaque élément 3, 4, externe de structure et la coque 19 et/ou 27 interposé entre la coque 19 et la structure interne principale 2.

Les éléments externes de structure comportent le berceau avant 3 et le berceau arrière 4 associés rigidement sous la structure interne principale 2, et portant des triangles de suspension 28 des roues 14, 15. Chaque berceau 3, 4 est associé rigidement à la structure interne principale 2 du châssis d'une part par une platine supérieure 29, 30 de suspension fixée par quatre boulons 99, 24 à une platine 31, 32 de réception elle-même associée rigidement à la structure interne principale 2, et d'autre part par deux pattes d'attache 33, 34, chacune d'entre elles étant fixée par un boulon 23, 25 respectivement sur une potence 35, 36 d'ancrage de la structure principale 2. Les platines 29, 30 de suspension des berceaux 3, 4 ainsi que les platines 31, 32 de réception associées rigidement à la structure principale 2 s'étendent au moins sensiblement horizontalement. Les boulons 99, 24 de fixation de ces platines s'étendent au moins sensiblement verticalement à travers la coque 19 qui est coincée entre la platine de suspension du berceau avant 3 et la platine de réception avant 31 et entre la platine de suspension arrière 30 du berceau arrière 4 et la platine 32 arrière de réception correspondant. Les platines 29, 30 de suspension des berceaux 3, 4 sont surélevées par rapport au plan principal horizontal défini par chaque berceau 3, 4. La platine de suspension avant 29 est reliée à la partie avant du berceau avant 3 par un support 37 formé de montants en forme de plaques ajourées. La platine de suspension 30 du berceau arrière 4 est reliée à la partie arrière de ce berceau arrière 4 par un support 38 formé de la même façon. Les pattes d'attache 33, 34 sont montées à la partie la plus centrale de chaque berceau 3, 4 et s'étendent longitudinalement en saillie par rapport à chaque berceau 3, 4 vers le centre du véhicule, c'est-à-dire vers l'avant pour le berceau arrière 4 et vers l'arrière pour le berceau avant 3.

Les deux berceaux 3, 4 sont constitués de façon identique (figure 8) d'un cadre tubulaire en forme général de pentagone renforcé par deux plaques latérales horizontales ajourées 39. Le cadre tubulaire de chaque berceau 3, 4 est constitué d'une traverse 40 portant les pattes d'attache 33, 34, deux longerons tubulaires 41a, 41b, et deux traverses extrêmes 42a, 42b inclinées pour former un sommet extrême 43. La traverse 40 du berceau avant 3 portant les pattes d'attache 33 constitue la partie la plus en arrière de ce berceau 3. Réciproquement, la traverse 40 portant les pattes d'attache 34 du berceau arrière 4 constitue la partie la plus en avant du berceau arrière 4. Les pattes d'attache s'étendent au moins sensiblement dans le prolongement des longerons 41a, 41b, et donc dans le plan général formé par le cadre tubulaire 40, 41a, 41b, 42a, 42b. Chaque berceau comporte une patte d'attache gauche 33a, 34a, et une patte d'attache droite 33b, 34b. Les pattes d'attache 33, 34 sont de préférence munies de dispositifs amortisseurs de vibrations.

Les triangles 28 de suspension sont fixés par des axes longitudinaux 44 à des pattes 45 de fixation montées solidaires du cadre tubulaire du berceau, à chaque extrémité de chaque longeron 41a, 41b. Ainsi, selon l'invention, chaque essieu 6, 7 du véhicule est porté par un berceau 3, 4 à l'extérieur de la coque étanche 19, y compris les différentiels de transmission 8, 9. De la sorte, seuls les arbres primaires 10, 11 de transmission avant et arrière traversent la coque 19. Sur la figure 5, la portion de coque 19 interposée entre le berceau arrrière 4 et la structure interne principale 2 a été représentée en section. Sur la figure 1, seule la portion de coque 19 traversée par l'axe 10 primaire de transmission avant a été représentée.

Les platines 31 avant et 32 arrière de réception des platines 29, 30 de suspension des berceaux 3, 4 sont centrées selon un axe longitudinal médian du véhicule et sont elles-mêmes portées par des potences de support 46, 47 situées en partie extrême avant inférieure et extrême arrière supérieure respectivement de la structure interne principale 2.

Dans le mode de réalisation représenté, la potence avant 46 est double et est à l'extérieur de la coque 19. Elle constitue donc un élément de structure externe. Elle est associée à la structure interne 2 par des vis 22 horizontales, la coque 19 étant interposée entre chaque potence 46a, 46b et l'extrémité avant 85 du longeron avant 77 et/ou le tube 97 de renfort avant qui porte un taraudage de réception de chaque vis 22. Sur la figure 3, la coque 19 interposée entre chaque potence 46a, 46b avant de la structure 2 n'est pas représentée pour plus de clarté.

La coque 19 est par ailleurs interposée entre la platine 30 de suspension arrière et la platine 32 de réception reliées l'une à l'autre par les boulons 24 s'étendant verticalement qui forment lesdits moyens 24 étanches d'association rigide.

Selon l'invention, les éléments 3, 4 externes de structure du châssis portent les essieux 6, 7, les roues 14, 15 et les suspensions du véhicule. Les berceaux 3, 4 avant et arrière portent les essieux 6,7 avant et arrière comme déjà dit et pour partie les roues 14, 15 grâce aux triangles 28 de suspensions.

Les éléments 3, 4, 5 externes de structure comportent par ailleurs deux poutres 5 latérales longitudinales à savoir une poutre 5a latérale gauche longitudinale et une poutre 5b latérale longitudinale droite. Chaque poutre latérale longitudinale est associée rigidement à la structure interne principale 2 par chacune de ses extrémités avant 49 et arrière 50, et par sa partie centrale 51.

Chaque poutre 5 latérale longitudinale est rapportée d'un côté de la structure interne principale 2 pour former l'élément périphérique latéral du châssis en s'étendant sur toute la longueur du châssis entre les deux essieux 6, 7. Chaque poutre 5 latérale longitudinale s' étend donc entre une roue avant 14 et une roue arrière 15, et définit un logement approprié à chacune de ses extrémités pour le passage et le débattement des roues 14, 15.

Les poutres 5 latérales longitudinales portent les éléments de suspension du véhicule, c'est-à-dire que chaque poutre 5 latérale longitudinale porte un amortisseur 52 de roue du véhicule à chacune de ses extrémités, c'est-à-dire un amortisseur de roue avant et un amortisseur de roue arrière. Sur la figure 9, on a représenté la façon selon laquelle la roue avant gauche 14a est montée par rapport à la poutre latérale longitudinale gauche 5a. Chaque amortisseur 52 de roues est fixé à l'intérieur de la poutre 5a latérale longitudinale creuse et s'étend au moins sensiblement longitudinalement. L'amortisseur 52 comporte un élément d'amortissement ainsi qu'un ressort de compression de rappel. Le cylindre de l'élément d'amortissement est relié par un axe transversal horizontal 53 à une paroi transversale 54 de la poutre 5a qui comporte un plat 55 longitudinal autour duquel une chape 56 de l'élément d'amortissement est engagée. L'amortisseur 52 est relié à son autre extrémité à un bras 57 de suspension qui s'étend au moins sensiblement verticalement et qui porte la roue 14, 15, en étant associé rigidement à son moyeu 58. L'amortisseur 52 est relié à ce bras 57 de suspension par l'intermédiaire d'un culbuteur 59 associé libre en rotation par rapport à la poutre 5a latérale longitudinale autour d'un axe transversal horizontal 60. Le culbuteur 59 comporte un premier bras associé rigidement par une rotule 61 à l'extrémité libre supérieure 62 du bras 57 de suspension, et un second bras s'étendant à l'opposé du premier bras par rapport à l'axe 60 dont l'extrémité est reliée à l'autre extrémité de l'amortisseur 52 autour d'un axe transversal horizontal. L'axe transversal horizontal 60 de rotation du culbuteur 59 est associé rigidement à la poutre 5a. Ainsi, lorsque le bras 57 de suspension et la roue se meuvent verticalement, le culbuteur 59 pivote autour de l'axe 60 et engendre la compression ou l'extension de l'amortisseur 52. Une telle disposition longitudinale de l'amortisseur 52 permet notamment un gain important de place.

Les éléments 3, 4, 5 externes de structure d'un châssis selon l'invention portent également au moins un réservoir 63 de carburant. Dans le mode de réalisation représenté (figure 7), on prévoit deux réservoirs et chaque réservoir 63 est inséré à l'intérieur respectivement de chaque poutre 5 latérale longitudinale, dans sa partie centrale 51. Du côté extérieur, la poutre 5 comporte une lumière 64 d'accès au bouchon du réservoir et le réservoir 63 communique avec le groupe moteur à l'intérieur de la coque 19 par l'intermédiaire d'une durite 65 qui sort du côté interne de la poutre 5 et traverse la coque 19. Un tel réservoir inséré dans une poutre creuse 48 peut être constitué d'un réservoir souple, de façon connue en soi.

Chaque poutre 5 latérale longitudinale est constituée de plaques de tôles repliées et ajourées.

La figure 10 illustre en détail les moyens étanches d'association rigide d'une poutre 5 latérale longitudinale à la structure interne principale 2. Chaque poutre 5, latérale longitudinale comporte quatre cylindres 66 de fixation s'étendant transversalement et régulièrement répartis le long de l'arête supérieure longitudinale de la poutre 5, et quatre cylindres 67 de fixation régulièrement répartis le long de l'arête inférieure longitudinale de la poutre 5. Chaque cylindre 66, 67 comporte un alésage creux à travers lequel une vis 20, 21 est engagée. Cette vis 20, 21 traverse une lumière cylindrique 68 ménagée à travers la coque 19 de sorte que l'extrémité libre de la vis 20, 21, munie d'un filetage 69 est engagée dans un taraudage 70 ménagé dans la structure principale 2. Le cylindre 66, 67 comporte un logement 71 de réception de la tête 72 de la vis. Un joint d'étanchéité externe 26 est intercalé entre chaque cylindre 66, 67 et la lumière 68 de la coque 19 et un joint d'étanchéité interne 27 est intercalé entre la lumière 68 de la coque 19 et l'extrémité débouchante du taraudage 70. La coque 19 est donc coincée et maintenue entre chaque cylindre 66, 67 et la structure interne principale 2 grace aux vis 20, 21. Une vis 20 est engagée dans chaque cylindre de fixation supérieure 66 de la poutre 5 et une vis 21 est engagée dans chaque cylindre de fixation inférieure 67 de la poutre 5. Chaque poutre 5 comporte au moins un cylindre de fixation 66 à chacune de ses extrémités libres 49, 50. Par ailleurs, chaque poutre latérale 5 comporte également des extensions 73 pour la fixation de la carrosserie 18 du véhicule.

Le cadre tubulaire rectangulaire supérieur 95 associé rigidement au-dessus du caisson central 74 comporte les taraudages 70 de réception des vis 20 supérieures d'association rigide des poutres 5 latérales longitudinales. Les taraudages 70 pour les vis 21 inférieures d'association rigide des poutres 5 latérales longitudinales sont ménagés dans les côtés longitudinaux 88a, 88b du squelette 87. Le tube de renfort avant 96 de la traverse extrême avant 83 et le tube de renfort arrière 97 de la traverse extrême arrière 84 portent également des taraudages 70 de réception de vis extrêmes supérieures 20 d'association rigide de chaque poutre 5 latérale longitudinale. Ainsi, la partie centrale 51 de chaque poutre 5 latérale longitudinale est associée rigidement au caisson central 74, au voisinage de ou aux traverses centrales 75, 76, puisque les taraudages 70 sont ménagés dans le cadre 95 en regard de ou au voisinage de chaque traverse 75, 76 centrale. Egalement, dans un châssis selon l'invention, chaque poutre 5 latérale longitudinale est associée rigidement à chaque traverse 75, 76, 83, 84, de la structure interne principale 2 et ce par l'intermédiaire du cadre rectangulaire 95 et des tubes de renfort 96, 97. Ainsi, pour chaque poutre latérale 5, on prévoit une vis de fixation extrême avant, une vis de fixation extrême arrière, deux vis de fixation au cadre tubulaire rectangulaire supérieur 95 en partie haute de chaque traverse centrale 75, 76, deux vis de fixation en regard des renforts transversaux centraux avant et arrière 92, 93 (c'est-à-dire en partie inférieure de chaque traverse centrale 75, 76), une vis de fixation en regard du côté avant 89 du squelette tubulaire 87, et une vis de fixation en regard du renfort transversal arrière 94 du squelette 87.

Selon l'invention, la coque 19 est aussi associée par collage ou soudure, c'est-à-dire par des moyens d'association surfacique à la structure interne principale 2 et/ou à des éléments 3, 4, 5 externes de la structure. Par exemple, la coque est collée le long de chaque côté longitudinal 88a, 88b du squelette inférieur.

Les berceaux avant et arrière 3, 4, sont associés à la structure interne principale 2 par des vis ou boulons 22, 23, 24, 25 de façon similaire aux poutres 5 c'est-à-dire avec des joints d'étanchéité externes et internes de part et d'autre de la coque 19.

»Pour la fixation du berceau arrière 4, l'extrémité arrière du longeron arrière 78 est prolongée vers le bas pour porter la platine de réception arrière 32 (figures 3 et 5).

La traverse extrême avant 83 est relevée par rapport au plan horizontal général du caisson central 74 et des longerons avant et arrière 77, 78, de façon à pouvoir supporter le mécanisme de commande d'un pare-brise escamotable et le poids des différents accessoires du poste de conduite. Cette traverse extrême avant 83 comporte un évidement longitudinal 98 de réception du mécanisme de commande du pare-brise et est prolongée vers le bas par la potence double 46 qui porte la platine 31 de réception avant pour porter le berceau avant 3. Les deux plaques de tôles 46a, 46b constituant cette potence 46 sont prolongées vers le bas jusqu'à un point de fixation 48a, 48b pour un vérin de commande du mécanisme d'escamotage du pare-brise.

Sur la figure 2 seule une portion de la coque 19 a été représentée et seule la poutre latérale 5a longitudinale gauche a été représentée. Bien évidemment, le châssis selon l'invention comporte également une poutre 5b latérale longitudinale droite, de façon strictement symétrique.

Le châssis selon l'invention est réalisé globalement par une structure mécano soudée à base de tubes de section carrée (ayant par exemple 2 à 5 centimètres de côté) pour le squelette 87, le cadre supérieur 95 et les renforts extrêmes transversaux 96, 97, et de plaques de tôles pliées et ajourées, comme précédemment décrit. Les longerons 77, 78, 80a, 80b, le caisson central 74 et les traverses extrêmes 83, 84, ont une hauteur qui est par exemple de l'ordre 10 à 30 cm.

La carrosserie 18 entoure le châssis et est associée rigidement à la partie supérieure de la structure interne principale 2 et aux éléments 3, 4, 5, externes de structure, notamment aux poutres 5 latérales longitudinales. La carrosserie 18 s'étend donc globalement au dessus et de chaque côté du châssis, alors que la coque 19 s'étend globalement au-dessous et de chaque côté du châssis.

## Revendications

1. Châssis de véhicule automatique amphibie caractérisé en ce qu'il comporte un caisson central (74) de réception d'un groupe Moteur délimité au moins vers l'avant et vers l'arrière par deux traverses centrales (75, 76), au moins un longeron avant (77) et au moins un longeron arrière (78) associés rigidement respectivement à chaque traverse (75, 76) du caisson central (74) pour définir deux espaces latéraux (79) correspondant à des places assises de chaque côté de chaque longeron (77, 78) à l'avant et à l'arrière du caisson central (74).

2. Châssis selon la revendication 1, caractérisé en ce qu'il comporte le même nombre de longerons avant (77) et de longerons arrière (78), les longerons avant (77) et arrière (78) s'étendant deux à deux selon une même direction longitudinale du véhicule.

3. Chassis selon l'une des revendications 1 et 2, caractérisé en ce qu'il comporte un longeron avant (77) et un longeron arrière (78) s'étendant selon la direction longitudinale médiane du véhicule de part et d'autre du caisson central (74).

4. Châssis selon l'une des revendications 1 à 3, caractérisé en ce que les traverses centrales (75, 76) sont reliées l'une à l'autre par deux longerons latéraux (80a, 80b) s'étendant entre les extrémités (81a, 82a, 81b, 82b) des traverses centrales (75, 76) pour les réunir en les prolongeant sur la même hauteur, de façon à former le caisson central (74).

5. Châssis selon l'une des revendications 1 à 4, caractérisé en ce que chaque longeron avant et arrière (77, 78) est constitué d'une poutre réalisée globalement d'une plaque de tôle repliée selon des lignes de pliage longitudinales.

6. Châssis selon l'une des revendications 1 à 5, caractérisé en ce que chaque longeron avant et arrière (77, 78) a une section droite transversale de même hauteur que celle de la traverse centrale (75, 76) à laquelle il est associé rigidement.

7. Châssis selon l'une des revendications 1 à 6, caractérisé en ce que chaque longeron avant et arrière (77, 78) a une section droite transversale en U, rectangulaire ou carrée.

8. Châssis selon l'une des revendications 1 à 7, caractérisé en ce que chaque traverse centrale (75, 76) est globalement constituée d'une plaque de tôle couchée sur chant de façon à former une paroi transversale verticale s'étendant sur toute la largeur du véhicule.

9. Châssis selon l'une des revendications 1 à 8, caractérisé en ce qu'il comporte une traverse extrême avant (83) associée rigidement à l'extrémité avant (85) d'un longeron avant (77) et une traverse extrême arrière (84) associée rigidement à l'extrémité arrière (86) d'un longeron arrière (78).

10. Châssis selon la revendication 9, caractérisé en ce que le caisson central (74), les longerons avant et arrière (77, 78) et les traverses extrêmes (83, 84) sont constitués de plaques de tôle repliées et ajourées.

11. Châssis selon l'une des revendications 1 à 10, caractérisé en ce qu'il comporte un squelette inférieur tubulaire (87) associé rigidement sous le caisson central (74), les longerons (77, 78, 80a, 80b) et les traverses (83, 84).

12. Châssis selon l'une des revendications 1 à 11, caractérisé en ce que le squelette inférieur tubulaire (8)7 comporte un cadre globalement rectangulaire (88a, 88b, 89, 90) et des renforts transversaux (92, 93, 94).

13. Châssis selon les revendications 4 et 12, caractérisé en ce que deux renforts transversaux (92, 93) s'étendent sous les traverses centrales (75, 76) et en ce que les longerons latéraux (80a, 80b) reposent sur des côtés longitudinaux (88a, 88b) du cadre formé par le squelette tubulaire inférieur (87).

14. Châssis selon l'une des revendications 1 à 13, caractérisé en ce que le squelette tubulaire inférieur (87) comporte des potences avant et arrière (35, 36) d'ancrage d'un berceau avant (3) et d'un berceau arrière (4).

15. Châssis de véhicule automobile amphibie caractérisé en ce qu'il comporte une structure interne principale (2) placée à l'intérieur d'une coque (19) étanche, et des éléments externes de structures (3, 4, 5) s'étendant à l'extérieur de la coque (19) et associés rigidement à la structure interne principale (2) à travers la coque (19) par des moyens (20, 21, 22, 23, 24, 25) étanches d'association rigide.

16. Châssis selon la revendication 15, caractérisé en ce que les éléments (3, 4, 5) externes de structure portent les essieux (6, 7), les roues (14, 15) et les suspensions du véhicule.

17. Châssis selon l'une des revendications 15 et 16, caractérisé en ce que les éléments (3, 4, 5) externes de structure portent au moins un réservoir (63) de carburant.

18. Châssis selon l'une des revendications 15 à 17, caractérisé en ce que la coque (19) est associée rigidement à la structure interne principale (2) par les moyens (20 à 25) étanches d'association rigide qui comportent des moyens de serrage pour coincer la coque (19) entre les éléments (3, 4, 5) externes de structure et la structure interne principale (2).

19. Châssis selon l'une des revendications 15 à 18, caractérisé en ce que les moyens (20 à 25) étanches d'association rigide sont des moyens ponctuels d'association rigide notamment par boulonnage.

20. Châssis selon l'une des revendications 15 à 17, caractérisé en ce que les éléments (3, 4, 5) externes de structure comportent deux poutres (5) latérales longitudinales.

21. Châssis selon la revendication 20, caractérisé en ce que chaque poutre (5) latérale longitudinale est associée rigidement à la structure interne principale (2) par chacune de ses extrémités avant (49) et arrière (50) et par sa partie centrale (51).

22. Châssis selon la revendication 21, caractérisé en ce que la partie centrale (51) de chaque poutre (5) latérale longitudinale est associée rigidement à chaque traverse centrale (75, 76).

23. Châssis selon l'une des revendications 10 à 22, caractérisé en ce que chaque poutre (5) latérale longitudinale est associée rigidement à chaque traverse (75, 76, 83, 84) de la structure interne principale (2).

24. Châssis selon l'une des revendications 20 à 23, caractérisé en ce que chaque poutre (5) latérale longitudinale porte les amortisseurs (52) de roue du véhicule.

25. Châssis selon la revendication 24, caractérisé en ce que chaque amortisseur (52) de roue est fixé à l'intérieur d'une poutre (5) latérale longitudinale creuse et est relié à un bras de suspension (57) au moins sensiblement vertical portant une roue (14, 15) par l'intermédiaire d'un culbuteur (59) associé libre en rotation par rapport à la poutre (5) latérale longitudinale autour d'un axe transversal horizontal (60).

26. Châssis selon l'une des revendications 15 à 25, caractérisé en ce que les éléments (3, 4) externes de structure comportent un berceau avant (3) et un berceau arrière (4) associés rigidement sous la structure interne principale (2) et portant des triangles de suspensions (28) des roues (14, 15).

27. Châssis selon l'une des revendications 15 à 26, caractérisé en ce que chaque berceau (3, 4) porte un différentiel de transmission ( 8, 9) relié à un arbre primaire de transmission (10, 11) traversant la coque (19) en provenance d'un groupe moteur, deux arbres secondaires de transmission (12, 13) à joints de cardan transmettant le mouvement aux roues (14, 15) à partir du différentiel (8, 9).

28. Châssis selon l'une des revendications 15 à 27, caractérisé en ce que la coque (19) est aussi associée par collage ou soudure à la structure interne principale (2) et/ou à des éléments (3, 4, 5) externes de structure.

29. Véhicule automobile amphibie caractérisé en ce qu'il comporte un châssis selon l'une des revendications 1 à 28.

30. Véhicule selon la revendication 30, caractérisé en ce qu'il comporte une carrosserie (18) entourant le châssis et associée rigidement à la partie supérieure de la structure interne principale (2) et aux éléments (3, 4, 5) externes de structure.
